# EUROPEAN PATENT SPECIFICATION

(11) **EP 3 753 705 B1**
(45) Date of publication and mention of the grant of the patent: **08.11.2023**
(21) Application number: 19181829.3
(22) Date of filing: 21.06.2019
(51) Int. Cl.: B29C 64/153, B29C 64/282, B33Y 30/00

(54) **ADDITIVE MANUFACTURING APPARATUS**
APPARAT ZUR ADDITIVEN HERSTELLUNG
APPAREIL POUR LA FABRICATION ADDITIVE

(43) Date of publication of application: 23.12.2020
(73) Proprietor: EOS of North America, Inc., Novi, MI 48377 (US)
(72) Inventor: Vanelli, Donald Lewis, Novi, MI Michigan 48377 (US); Shanklin, Lance Bruce, Novi, MI Michigan 48377 (US); Hayes, Gregory Richard, Novi, MI Michigan 48377 (US); Pfeiffer, Hakan, Novi, MI Michigan 48377 (US)
(74) Representative: Beckord & Niedlich Patentanwälte PartG mbB

(56) References cited:
- WO-A1-2019/058883
- WO-A2-2019/133422
- JP-A- 2008 185 607
- US-A1- 2003 214 571
- US-A1- 2014 263 209

## Description

### FIELD OF THE INVENTION

The invention relates to a technique of additive manufacturing in which successive layers of an object or workpiece are built up from a powder, fluid or other fluent medium according to previously determined successive so-called two-dimensional "slices" or layers of the object or workpiece, and more particularly to a system and method using a light valve to produce a work beam that can be rapidly scanned across the build area for significantly increased build speed.

### BACKGROUND OF THE INVENTION

Additive prototyping or manufacture techniques using a laser or other energy beam to melt, fuse, cure, sinter or otherwise solidify material to build an object or workpiece (hereafter simply referred to as an object) in a layer-wise manner are well known. It is a continuing effort in the field to speed up the build process, to thereby shorten the time required to build an object. In one standard approach, an energy beam, such as a laser beam, is focused to a spot size and caused to scan over a build area in accordance with controlling apparatus that is driven by software which recreates a layer or "two-dimensional" slice of an object being built up, for example as described in WO2019/058883A1. Layers are consecutively solidified and joined, as by hardening (e.g. a liquid polymer), fusing, melting, sintering or the like. The speed of scanning of a laser beam is of course limited by its single focus point, and the inertial forces affecting movement of the scanner. It can therefore take many hours to make an object.

Therefore, it is an object of the invention to provide an improved way of performing an additive manufacturing procedure.

### SUMMARY OF THE INVENTION

The object of the invention is achieved by the additive manufacturing apparatus of claim 1, and by the additive manufacturing method of claim 11.

According to the invention, the additive manufacturing apparatus comprises an optical element realised to expand a radiation beam (generated by an energetic source of solidifying radiation) into a planar beam, i.e. a one-dimensional "line" of light; a light valve assembly arranged to receive the planar beam and to modulate the planar beam; a beam expander for expanding the modulated output of the light valve; a scanning device configured to receive the expanded beam from the beam expander and to direct the expanded beam toward a build area surface; and a lens arrangement configured to correct distortion of the beam from the scanning device. The inventive additive manufacturing apparatus further comprises an input interface for receiving a pixel power string for a desired exposure of at least a part of a layer of the object; and a controller configured to control at least the light valve assembly and the scanning device on the basis of the received pixel power string. In this way, the expanded beam can work very precisely on a build material in the build area to form or build the desired object.

The light valve essentially receives the planar beam and modulates this planar beam to produce an output array of individually switched "pixels", and this output array forms the basis of the work beam. The work beam, i.e. the beam that arrives at the build area, will accordingly comprise an array of very fine light spots or pixels. A "pixel" in the context of the invention may be regarded as a very small point on the build area when exposed by the corresponding part of the work beam. A "pixel power string" (or "pixel switching string) is to be understood as a string of on/off entries, each entry relating to a light-spot or pixel of the work beam that arrives at the build area, specifying whether that pixel is switched "on" or "off". The light spots of the work beam have essentially the same power, determined by the power of the beam generated by the initial radiation beam. The shape exposed by a light spot can be irregular or regular in shape, depending for example on the speed at which the work beam is being moved relative to the build area. A pixel power string can be compiled for a partial layer or a complete layer of a single object or multiple objects, depending on the object size and the size of the work beam, as will become clear from the description that follows. The controller can be supplied with any relevant parameter values such as laser power parameters for the coordinates of the build area, switching rates, etc.

Since the light valve is controlled to modulate the planar beam in order to obtain a work beam with multiple individually controlled light-spots, a pixel power string may also include relevant light valve control parameters. For example, a work beam may comprise a combination of light-spots and "empty" spots, and a pixel power string may specify which light-spots are to be turned "on", and which parts of the work beam are to remain switched "off".

According to the invention, the additive manufacturing method comprises the steps of expanding a radiation beam into a planar beam; arranging a light valve assembly to receive the planar beam; providing an optical system realised to expand the modulated beam that is output by the light valve assembly; providing a scanning device that is configured to direct the expanded beam towards a build area surface; providing a lens arrangement that is configured to perform distortion correction on the expanded beam. The method further comprises steps of receiving a pixel power string for a desired exposure of at least a part of a layer of the object, and operating the light valve assembly and scanning device according to the received pixel power string.

The dependent claims and the following description disclose particularly advantageous embodiments and features of the invention. Features of the embodiments may be combined as appropriate. Features described in the context of one claim category can apply equally to another claim category.

In accordance with one aspect of the invention, an object build area is exposed to a radiation beam, for example a laser beam originating from a laser light source, which has been modulated by a grating light valve (GLV) to give an output array, i.e. a linear beam array of individually controllable "pixels". It is therefore possible to melt, sinter, fuse or cure predetermined portions of the build area since the modulated light beam is essentially the equivalent of individually controlled pixels. The grating light valve can be controlled to result in rapid movement and positioning of the output array on the build area. Conceptually, the GLV takes the one-dimensional planar laser beam and transforms it into a linear array of individually controllable spots or pixels. That one-dimensional array of individually switched light spots or pixels can then be directed at the build area, for example it can be moved linearly across the build area surface. Build speed is considerably increased, and fine detail improved, among other advantages.

In a particularly preferred embodiment of the invention, a pixel power string for a desired exposure of a layer of the object comprises a set of on/off values for the pixels of the output array. For example, any pixel that will be directed at a point on the build area which is to be solidified shall be turned "on" and the intensity of the work beam shall be sufficient to melt the build material at that point; any pixel that will be directed at a point on the build area which is not to become part of the object shall be turned "off". The controller is preferably configured to "translate" a sequence of pixel switching strings into control signals to operate the light valve and the scanning device accordingly.

The inventive additive manufacturing apparatus may be fed with a suitable sequence or pattern of pixel power strings in order to complete a desired build. In a preferred embodiment of the invention, the additive manufacturing apparatus comprises a pixel power string compilation unit that is configured to compute such a sequence, i.e. to compute a pixel power string for each layer of an object, for a partial layer of an object, or for the layers of several objects being built simultaneously. To this end, such a pixel power string compilation unit may be provided with relevant parameters concerning the build material, the form of the object to be built, etc.

In a particularly preferred embodiment of the invention, a GLV arrangement is used to heat an entire powder bed, or targeted areas of the powder bed, to just below melting temperature. This "general heating" of the powder bed is desirable for a number of reasons, and it is known from the prior art to use dedicated bed heating elements such as separate radiant heaters, which add to the cost and complexity of the additive manufacturing system. In the present invention, the powder bed can be heated using the same components that are used for solidification of the build material. Heating of the powder bed can be done by defocusing the linear beam array when it is not being used for building, or by rapid scanning across the powder bed with a tighter beam. The build material can be heated using the light valve arrangement just in the vicinity of the part build.

According to the invention, pixel switching strings are compiled to specify pixels that are switched in a manner that will result in a warming the build material prior to a melting step. For example, in a linear output array that is swept across the build area, the leading 10% of pixels may be switched briefly "on" and then off again, once or repeatedly, so that the total power delivered by the leading 10% of pixels is insufficient to melt the build material on account of the brief "on" time. The remaining 90% of the pixels in the work beam that will be used to expose the object layer to solidification radiation are switched "on" for a duration that is sufficient to melt the build material. In this way, the light valve is used to generate a work beam that can heat a predefined region in the build area to a temperature below that of solidification of the build material, preferably immediately prior to a subsequent melting/solidification step. In this embodiment, the build material is pre-heated using light spots that have the same intensity as the light spots that are used to solidify the material, but which are only switched on for a brief time. These pixels can be switched "on" just once or repeatedly, in which case the duty cycle is chosen to achieve the desired warming effect.

The inventive GLV-based system is scalable by using multiple GLV devices, for example several GLVs arranged in line, so that their linear output arrays are combined to achieve a favourably wide one-dimensional work beam, for example a work beam with a width similar to the width of the build area. A pixel switching string for such a light valve assembly would in this case have the same number of entries as the combined length of the row of GLVs. In an alternative embodiment, two or more identical GLVs might be arranged side-by-side to obtain a two-dimensional array of light-valve elements, resulting in two-dimensional work beam. In such an embodiment, the controller receives separate independent pixel switching strings for the set of GLVs, and applies these simultaneously to result in appropriate control signals for the GLVs. In an alternative embodiment, a planar light valve (PLV) is also contemplated, being adapted in a similar manner as the GLV described herein. The PLV is a "two-dimensional" equivalent of the "one-dimensional" GLV, and is capable of transmitting higher power due to higher active chip area. A PLV may also function as a phase modulator.

A lens or lens array is used to correct the expanded beam for distortion correction prior to exposing the build area as a work beam (work beam being used to refer to the beam at the build area surface that provides the energy to build a layer of the object). A controller operates the light valve and scanning device according to predetermined exposure detail, for example the point(s) in the build area that are to receive energy, the desired intensity of the energy, etc., depending amongst others on the geometry of the individual layers or slices in the build-up of the object. The controller may operate the light valve and scanner in a mode in which the resulting expanded work beam extends essentially over the entire width of the build area surface.

As mentioned above, the controller can operate components of the system so that the expanded work beam can be used for heating the build area surface to a temperature below that of solidification of the build material.

The build area generally has a length and a width. The one-dimensional work beam produced using a GLV may have an end-to-end width that is less than the width of the build area. In a further preferred embodiment of the invention, the expanded work beam is scanned or "swept" across the width of the build area in passes, progressing along the length of the build area. The passes may be adjacent one to the next, together covering the extent of the build area surface during the build-up of a layer. Alternatively, the expanded work beam can be controlled to cover less than the width of the build area, progressing along a desired length of the build area, thereby covering less than the entire extent of the build area surface during the build-up of a layer.

The controller may operate the expanded work beam in a raster scan mode. Alternatively, the controller may operate the expanded work beam in a television (TV) mode.

Other objects and features of the present invention will become apparent from the following detailed descriptions considered in conjunction with the accompanying drawings. It is to be understood, however, that the drawings are designed solely for the purposes of illustration and not as a definition of the limits of the invention.

### BRIEF DESCRIPTION OF THE DRAWINGS

- Fig 1: is a schematic view of the major components of a first embodiment of the additive manufacturing apparatus in accordance with an aspect of the invention;
- Fig 2: is an illustration of how the beam from the assembly of Fig 1 could be scanned across a build area;
- Fig 3: is an illustration of the use of multiple grating light valve devices for a wider coverage of the build area;
- Fig 4: is a perspective schematic view of a second embodiment of the inventive additive manufacturing apparatus;
- Fig 5: is a schematic representation of an optical train in the embodiment of Fig 4;
- Fig 6: is a schematic plan view of the arrangement shown in Fig 5;
- Fig 7: illustrates the operation of the embodiment of Fig 1;
- Fig 8: illustrates the operation of the embodiment of Fig 4;
- Fig 9: schematically illustrates an exemplary pixel power string for use in the inventive method;
- Fig 10: shows a further exemplary pixel power string for use in the inventive method;
- Fig 11: shows a cross-section through an object being built using the inventive method.

In the drawings, like numbers refer to like objects throughout. Objects in the diagrams are not necessarily drawn to scale.

### DETAILED DESCRIPTION OF THE EMBODIMENTS

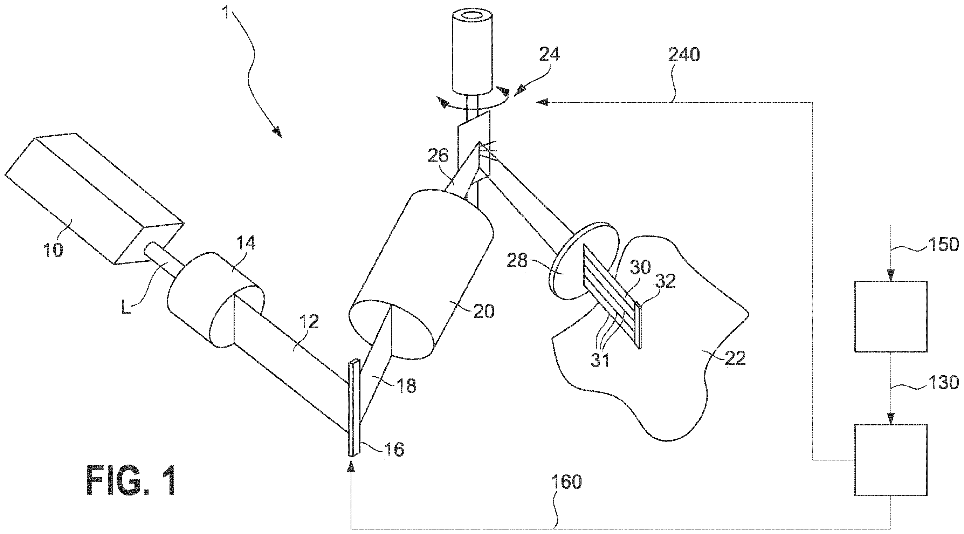

Referring now to Fig. 1, an embodiment is shown in schematic presentation using an exemplary arrangement of major components. A radiation source, such as a 120W 808 nm laser light source 10, generates a single-point laser beam L which is then focused to a planar beam 12 using appropriate optics, such as a slit aperture or lens. The planar beam 12 is then directed at a grating light valve 16. In this exemplary embodiment, the GLV 16 is realised as a spatial light modulator of the MEMS (micro electro mechanical systems) type. The output array 18 from the GLV 16 is then passed through a beam expander 20 to achieve an operational width for application to the build area surface 22 or object build area 22. The operation of the GLV will be described in more detail below. Other relevant components of this particular embodiment are a scanner 24 (single galvanometer) that directs the expanded beam 26 through an F-theta lens 28, which is used for distortion correction. The ultimate beam 30 from the lens 28 is then an elongated linear array 32 or "line segment" of beams 31 that are focused upon the object build area 22. For convenience, the diagram shows the linear array 32 as if it terminates in a vertical element. However, as the skilled person will know, any light beam directed at the object build area 22 will terminate at a point in the powder bed. In the present embodiment, therefore, it shall be understood that the elongated linear array 32 of light also terminates in the powder bed. Instead of terminating at a single point as is known from the prior art, the linear array 32 terminates in a set of points ("light spots") or pixels, and the number of "active" and "inactive" points in the linear array 32 depends on the manner in which the GLV was controlled to generate the array of individually switchable beams 31.

Fig 1 also shows a controller 13 that issues control signals 160 for the light valve 16 and control signals 240 for the scanning device 24 (the controller 13 can also be used to control other components of the additive manufacturing apparatus 1). These control signals 160, 240 are generated by the controller 13 according to a sequence of pixel power strings 130. These define the switching status of each "pixel" of the work beam 30. A pixel power string compilation unit 15 prepares the sequence of pixel power strings 130 required to build one or more objects from the build material (for example a powder) in the build area 22. The pixel power string compilation unit 15 is provided with all relevant parameters, for example the properties of the build material 500, the shape of each object to be built, etc.

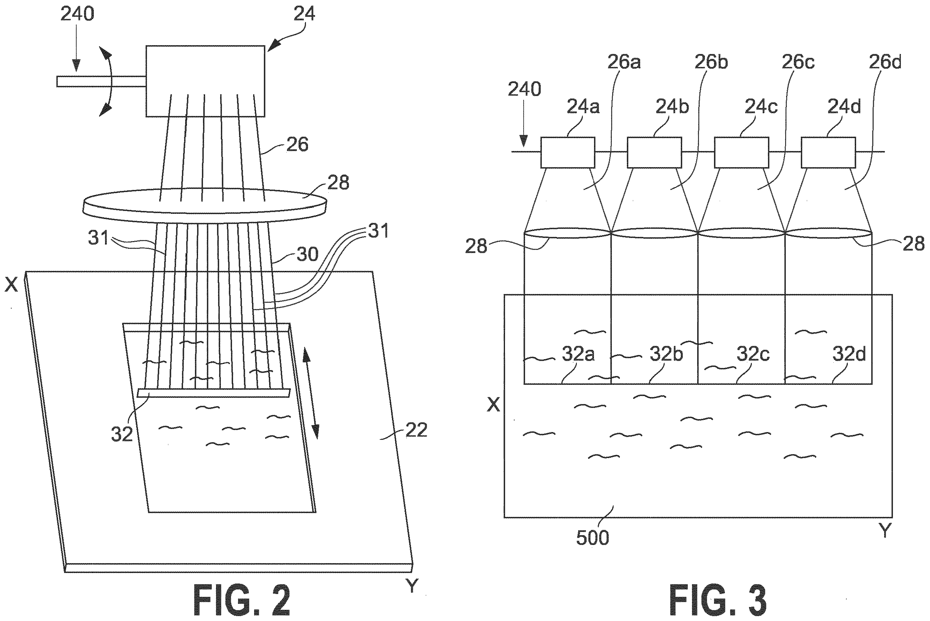

As seen in Fig. 2, the linear array 32 of light points 31 can extend across a segment of the build area 22. The scanner 24 is controlled to move the expanded beam 26 (and therefore also the linear array 32) perpendicular to the width of the build area 22, to thereby expose desired portions of the build area 22 to the work beam 30. The principal of operation of an additive manufacture system such as a laser melting system (e.g. powder bed selective laser melting, fusing or sintering) are known to the skilled person and readily adaptable for the invention.

It will be understood that this invention is applicable to other additive manufacture systems and processes, such as those using liquid polymer photo-curable materials. The invention is expandable, or scalable. As shown in Fig. 3, one way to increase the portion of the build area exposed to a beam originating from a laser source 10 is to deploy multiple GLV devices and other relevant components as previously described. In this exemplary embodiment, the additive manufacturing apparatus comprises multiple GLV devices and scanners 24a-24d to deflect expanded beams 26a - 26d towards F-theta lenses 28 to generate an extended line of linear arrays 32a - 32d. These combined linear arrays 32a - 32d can be moved collectively as a single line to selectively melt regions of the build material 500 in the build area 22. Alternatively, a single but much larger GLV device could be used, and a larger F-theta lens in place of multiple such lenses.

A prototype was made and operated using a GLV pixelated to result in a linear array of 1088 individually controllable beams 31 or pixels 31 across a span of 2.0 cm, resulting in approximately an 18 micron spot size per pixel. Such a GLV device comprises a plurality of individually movable ribbon-like micro-bridges or "fingers" mounted on a suitable substrate such as silicon. The micro-bridges or fingers are arranged in parallel to form reflectors and are controlled by a voltage applied between the fingers and substrate. Depending on how it is controlled, a micro-bridge or finger will reflect light or not. A "pixel" of the resulting linear array may arise from the collective action of multiple fingers that create a diffraction grating, for differing optical paths.

The GLV assembly preferably comprises optics to output a planar beam. The planar beam can then be passed into a beam expander as explained above. In the embodiment described above, the expanded beam is projected through an F-theta lens with a 400 mm focal lens to produce an operational beam or linear array with a width of 12 cm at the surface of the build area 22. The build area 22 of the successfully tested prototype system was 120 mm by 120 mm. In this embodiment, the expanded work beam 26 is extended across substantially the entire build area surface 22 in a single sweep by the scanning device 24.The "spot" size of a single pixel in the foregoing system was 110 micron.

It is considered desirable to reduce the width of the linear array 32, for example to 2.0 cm or less at the build area surface, in order to achieve higher energy density in the beam 26 and to allow the employment of more effective scan strategies. Furthermore, reducing the beam width also decreases the single pixel spot size, achieving a finer resolution on the build area surface.

In testing, successful build scanning of a build area of the foregoing size was achieved in approximately 12.4 seconds, which was considered an improvement by a factor of seven compared to a prior art additive manufacturing apparatus. With higher laser power input into the GLV (or PLV), faster scanning times over a similar size build area can be achieved. For example, with a 1 kW laser input into a 1064 nm GLV device, scanning times could be reduced by more than a factor of ten compared to the exemplary GLV embodiment described above.

Control of the GLV and scanning device is preferably accomplished using suitable control software. Multiple passes, preferably at high frequencies, may be coordinated to deliver sufficient energy for the solidification of that object layer. In one example demonstration of the concept, the system described above was used to scan the same pattern on the build surface area 22 between 2 - 100 times in the same amount of time as a single pass (12.4 seconds as referenced above). The resulting built objects were shown to have better absorption of energy and a favourably high density. The inventive additive manufacturing apparatus favourably reduces the total amount of energy which must be delivered to the build surface in order to form objects, thus allowing the system to be operated faster for the same amount of input power.

In the standard process of laser melting or fusing, it is desirable to heat the powder material in the build area to a temperature below but near its melting point. Techniques currently employed to accomplish this typically rely upon separate heating elements, such as radiant heaters located in the build chamber, which of course then add to the cost and complexity of the system. The present invention, however, can accomplish the same general build area heating using the laser energy source.

For example, the linear array 32 can be defocused when not being used as a work beam for build material solidification in a solidifying scan. The defocused linear array 32 can be scanned across the powder bed to deliver a lower power beam spread that heats the powder in a "warming scan", but which does not heat the powder to the point of melting/solidification. Similarly, the linear array could be of reduced power when used for a warming scan. The warming scans could be used in synchronization with the solidifying scans, for example a warming scan can precede a solidifying scan.

As described above, the controller controls the light valve and scanning device to produce a working beam that includes light spots that are switched in a manner that will result in "warming" a predefined region to a temperature that is below the melting/solidification temperature of the build material. Warming of the build material can be achieved when the intensity of the light arriving at the build area is in the order of 40% - 80% of the intensity required to melt the build material. The controller subsequently controls the light valve and scanning device to produce a working beam that includes light spots that are switched in a manner that will result in melting the build material in the preheated region. Preferably, preheating a region of the build area to a temperature below that of melting/solidification precedes the actual melting in that region by at most 100 ms, more preferably by at most 10 ms, more preferably by at most 1 ms.

Since the GLV effectively produces the equivalent of individually controllable pixels in the linear array 32, this makes it possible to achieve better mechanical properties in the object being built. For instance, heat control in the immediate vicinity of the object can be controlled on a micro level, versus a general "macro" heating. The ability to vary the intensity of individual pixels in the linear array also allows smoother surfaces and finer detail resolution in the built object, referred to as grey-scale printing. Furthermore, the temperature distribution and heat flows in the entire build surface can be more accurately managed by the point-source heating capability of the GLV used in this configuration.

It is also possible to manipulate the linear array to move it in a manner other than a static sweep. The scanning device could be controlled so that the output array from a GLV is effectively made to "jump" from one position in the build area to another position in the build area.

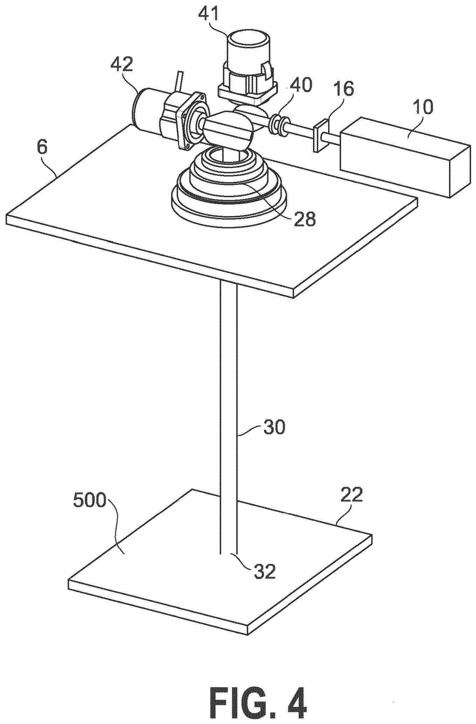

A second embodiment is shown in Figs 4 - 6 and Fig 8. In this embodiment, a scanner operating in an x-y plane is employed. In Fig 4, the energy beam from the laser 10 is passed to a GLV 16 (of the type as previously described and shown here only very schematically), and then through a series of optics 40. In this version, the optics system 40 could comprise two N-SF11 lenses and one N-BK7 lens, yielding five spherical surfaces and one aspherical surface. The "image width" at the build area surface 22, i.e. the width of the resulting linear array 32 may be approximately 80 mm. The elements of the optics system or optical train can be adapted as will be readily understood by those of skill in the art.

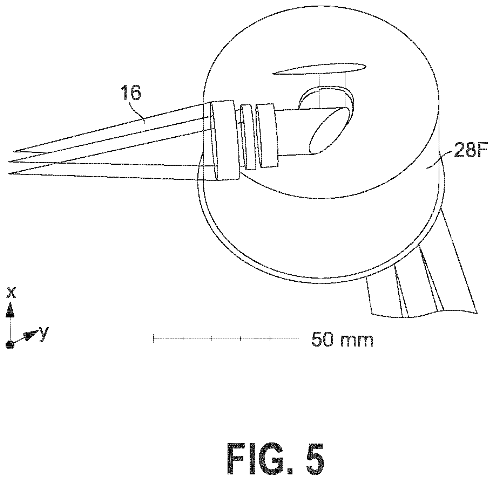

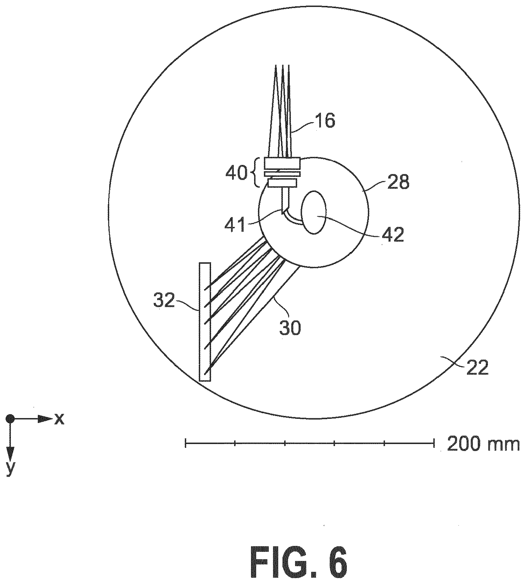

The scanner employed is a standard x-y scanner. It has two controllable galvanometers 41, 42 for light beam control and movement in the x- and y-directions. The beam as directed by the scanner system 41, 42 is then processed through the F-theta lens 28, and the resulting beam 30 has the form of a linear array 32 at the build area surface 22. Figs 5 and 6 show further simplified schematics of the optical train.

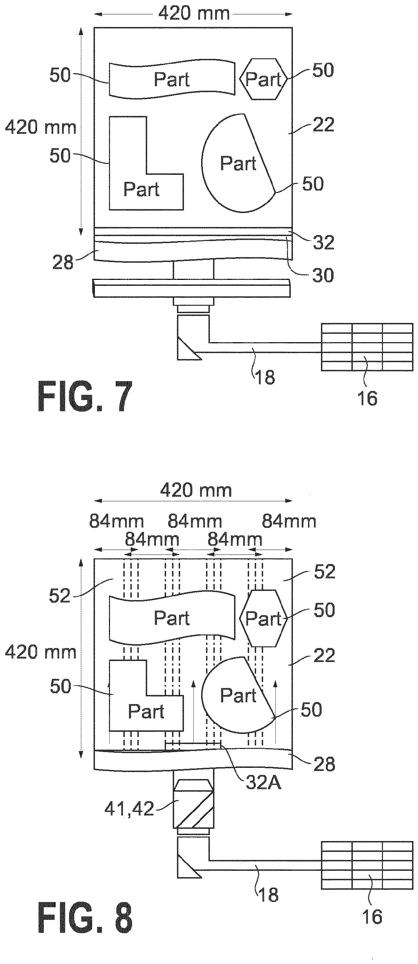

Figs 7 and 8 illustrate the general conceptual arrangement and operation of the two embodiments described above. Although the linear array appears to be directed at the objects 50 from the side, it shall be understood that the linear array is directed downward onto the build area in the usual manner. In Fig 7, the linear array 32 is essentially spread across the width of the build area 22, in this case the linear array 32 has a width of 420 mm. Various parts 50 or objects 50 may be built simultaneously in order to utilize the build area 22 most efficiently. The beam or linear array 32 is moved across the length of the build area, with the GLV operated by the controller to switch selected micro-ribbons (resulting in pixels of the linear array 32) as targeted in the build sequence for that "slice" of the objects 50. Only those pixels required to solidify the build material are active or "on" in the linear array 32, and all other pixels are inactive or "off".

Fig 8 shows a smaller linear array 32A being directed at the build area surface 22. This linear array 32A, obtained using the same laser light source as that used in the embodiment of Fig 7, now provides the same amount of energy output in a shorter "line", thereby concentrating the heating output while also achieving finer spot size on the build surface, since the shorter line retains the pixel output of the GLV device (in this case 1,088 pixels). Using the x-y scanning approach, the smaller linear array 32A is moved across the width of the build area 22 in a ratchet-type raster scan similar to a video mode, and also over the length of the build area 22. In this embodiment, a rectangular stripe or path 52 traced by a linear array 32A is approximately 84 mm in width, and these paths 52 are overlapping slightly within the build area width of 420 mm. A single scan of the entire bed width can still be accomplished in the same time, however, within each stripe the line beam or linear array 32A can be rapidly jumped to only those regions of the build area that need to be melted, thus affording the opportunity to greatly increase the overall speed at which a build layer can be completed.

Using the system of the second embodiment (e.g. Fig 8), it can be understood that the beam paths 52 can be controlled so that the beam can "skip" from a first path to a second path if there is no more material to be solidified in the first path. This then enables a further increase in the speed of a build, as only those areas requiring solidification need be targeted.

A variant on the type of arrangement of Fig 7 would also employ the smaller linear array 32A, but use a series of mirrors (galvanometers) each separately aligned with a specific beam path 52. When a mirror is engaged to intercept the working beam, the mirror will deflect the beam into a given path 52. Similarly, such an arrangement could be accomplished by a linear translation of a single mirror along one axis and using the mirror to project the line beam onto a single galvanometer mirror and through an F-theta lens to sweep in the other axis along the build surface 22.

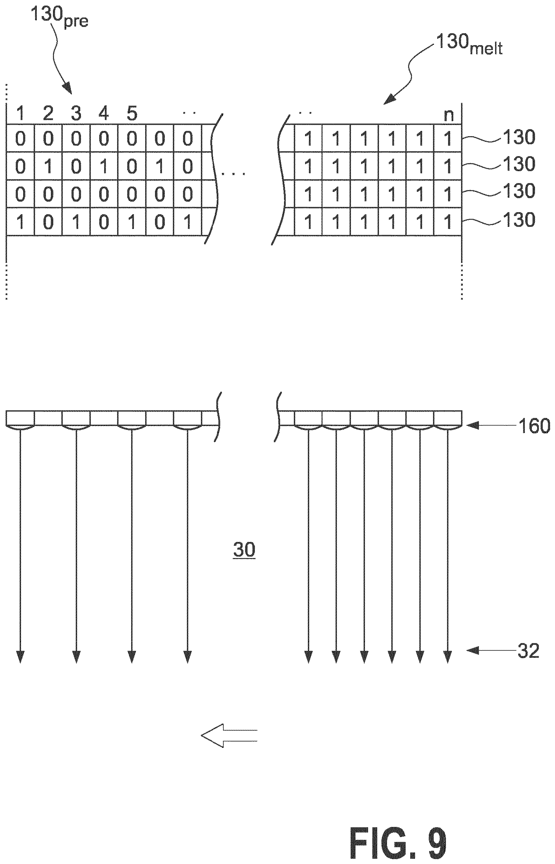

Fig 9 is a simplified schematic representation of a sequence of pixel power strings 130 for a work beam 30, which may be generated by the pixel power string compilation unit 15. The pixel power strings 130 will be applied for an output array of a GLV with n reflective elements, so that the work beam comprises n individually controlled pixels. Here, the n pixels of the work beam 30 that arrives at the build area 22 (after expansion and distortion correction as described in Figs 2-8 above) may be assumed to be evenly distributed over the width w₃₀ of the work beam 30. It shall also be understood that the width of the work beam 30 is less than the width of the build area, and that the scanning device is controlled to sweep the work beam 30 sideways across the build area (from right to left in the diagram) during one width-wise pass. Each width-wise pass is followed by a small shift or offset in the length-wise direction so that the work beam 30 can ultimately cover the entire build area.

In this very simple example, each output array pixel power string 130 comprises two zones. A first "leading" zone 130ₚᵣₑ specifies that some leading pixels are switched rapidly "on" and "off" in a manner that will result in preheating the build material prior to solidification. The other zone 130ₘₑₗₜ specifies that the remaining pixels are "on". This sequence of pixel power strings 130 can be used for a work beam 30 that will be moved from right to left (looking at the plane of the page), so that a region of the build material at the left-hand edge of the object is preheated immediately prior to a subsequent solidification step.

The controller can proceed to "sweep" the work beam across the build area while applying the sequence of pixel switching strings 130 to control the GLV 16, preheating build material immediately prior to melting and solidification. This approach to compiling a pixel power string sequence may be applied when a relatively narrow work beam is used, i.e. the work beam is significantly narrower than the width of the current layer of the object being built.

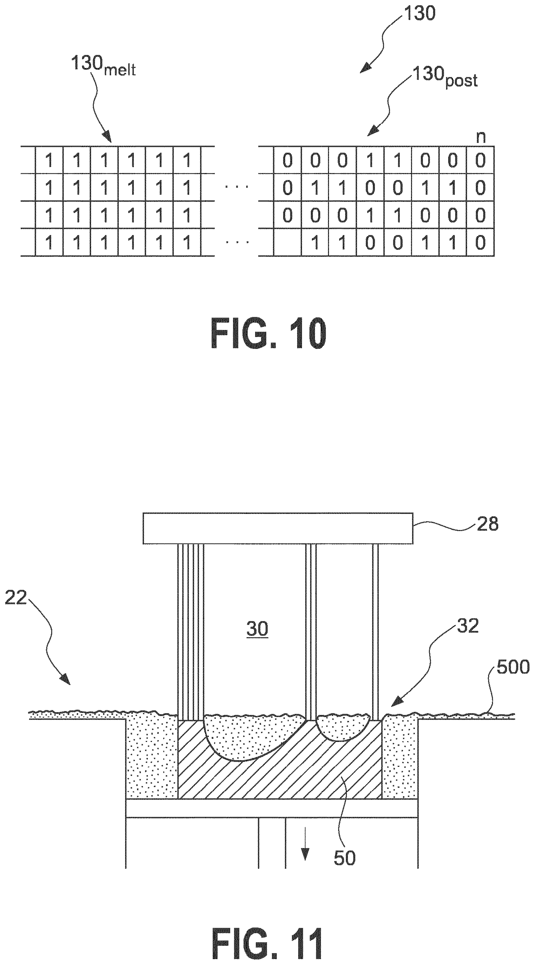

Fig 10 shows another example of a sequence of pixel power strings 130. Here, each pixel power string 130 comprises a "melt" zone 130ₘₑₗₜ as described above for solidification of the build material during a scan, and a following "controlled cooling" zone 130ₚₒₛₜ, with pixels that are switched at a frequency that assists the melted build material to cool less rapidly, thereby reducing or eliminating the likelihood of cracks developing in the build material as it solidifies.

Fig 11 shows a very simplified cross-section through the build area 22 during an additive manufacturing procedure. The diagram shows a partially completed object 50 (on a platform that can be lowered in a layer-wise manner as will be known to the skilled person) and a layer of build material 500. The work beam 30 is shown schematically to indicate that only certain groups of pixels or light-spots will be "on", and that all other pixels are "off". The width w₃₀ of the work beam 30 in this case is wider than the current object layer width, so that solidification of the build material 500 in this layer does not require the work beam to be moved sideways over the build area 22. Instead, melting of the desired regions of the build material 500 is done in a single pass, and the unaffected build material 500 remains in powder as indicated in the diagram.

The scanning system discussed in the above embodiment is an improvement over traditional single-point scanning techniques such as skywriting (where the laser beam follows a loop at the end of a line scan to start a return scan back) and EOV (end of vector) scanning controls employed in many of today's single-point scanning systems, since it results in higher productive time and throughput.

Although the present invention has been disclosed in the form of preferred embodiments and variations thereon, it will be understood that numerous additional modifications and variations could be made thereto without departing from the scope of the invention. For the sake of clarity, it is to be understood that the use of "a" or "an" throughout this application does not exclude a plurality, and "comprising" does not exclude other steps or elements.

### List of reference

| | |
|---|---|
| additive manufacturing apparatus | 1 |
| controller | 13 |
| output array intensity distribution | 130 |
| warming | 130ₚᵣₑ |
| melting | 130ₘₑₗₜ |
| controlled cooling zone | 130ₚₒₛₜ |
| pixel string compilation unit | 15 |
| exposure parameters | 150 |

| | |
|---|---|
| radiation beam | L |
| planar beam | 12 |
| expanded beam | 26, 26a - 26d |
| work beam | 30 |
| width of work beam | w₃₀ |
| pixel | 31 |
| linear array | 32, 32a - 32d |

| | |
|---|---|
| optical element | 14 |
| light valve assembly | 16 |
| light valve control signal | 160 |

| | |
|---|---|
| beam expander | 20 |
| scanning device | 24, 24a - 24d |
| scanning device control signal | 240 |
| lens arrangement | 28 |

| | |
|---|---|
| object | 50 |
| build material | 500 |
| build area | 22 |

## Claims

1. An additive manufacturing apparatus (1) for making an object (50) using an energetic source of solidifying radiation working upon a build material (500) in a build area (22), comprising:
- an optical element (14) realised to expand a radiation beam (L) into a planar beam (12);
- a light valve assembly (16) arranged to receive the planar beam (12) and to generate an output array (18) of individually controlled light spots;
- a beam expander (20) for expanding the output of the light valve (16);
- a scanning device (24) configured to receive the expanded beam (26) from the beam expander (20) and to direct the expanded beam (26) toward the build area (22);
- a lens arrangement (28) configured to correct distortion of the expanded beam (26) from the scanning device (24) to give a work beam (30) in the form of a linear array (32) at the build area (22);
- an input interface for receiving a sequence of pixel power strings (130) for a desired exposure of an object layer (51) of the object (50), wherein each pixel power string (130) comprises a leading zone (130ₚᵣₑ) in which leading pixels are switched on and off in a manner that will result in preheating the build material (500) prior to solidification, and a melt zone (130ₘₑₗₜ) in which the remaining pixels are on; and
- a controller (13) configured to control at least the light valve assembly (16) and the scanning device (24) to sweep the work beam (30) across the build area (22) while applying the sequence of pixel switching strings (130) to control the light valve assembly (16), thereby preheating build material (500) immediately prior to melting and solidification.

2. An additive manufacturing apparatus according to claim 1, wherein a pixel power string (130) for a desired exposure of a layer of the object (50) comprises a switching state for each light spot of the output array (32).

3. An additive manufacturing apparatus according to claim 1 or claim 2, comprising a pixel power string compilation unit (15) is configured to compile a pixel power string (130) for a layer of an object (50).

4. An additive manufacturing apparatus according to any of the preceding claims, wherein a pixel power string (130) further comprises a controlled cooling zone (130ₚₒₛₜ) in which pixels are switched at a frequency that assists the melted build material to cool less rapidly.

5. An additive manufacturing apparatus according to any of the preceding claims, wherein the lens arrangement (28) is configured to correct the beam (26) from the scanning device (24) for distortion correction prior to exposing the build area (22).

6. An additive manufacturing apparatus according to any of the preceding claims, wherein the scanning device (24) comprises an x-y scanner.

7. An additive manufacturing apparatus according to any of the preceding claims, wherein the light valve assembly comprises a grating light valve (16).

8. An additive manufacturing apparatus according to claim 7, wherein the grating light valve (16) is chosen to obtain an expanded beam (26) comprising 1088 individually controllable beams.

9. An additive manufacturing apparatus according to any of claims 1 to 6, wherein the light valve assembly comprises a planar light valve.

10. An additive manufacturing apparatus according to any of the preceding claims, wherein the lens arrangement (28) is configured to obtain a work beam (30) with an end-to-end width (w₃₀) that is less than the width of the build area (22).

11. An additive manufacturing method of making an object (50) with an additive manufacturing apparatus (1) according to any of claims 1 to 10, which method comprises the steps of:
- providing a planar beam (12) of solidifying radiation;
- receiving a sequence of pixel power strings (130) for a desired exposure of at least a part of a layer of the object (50), wherein each pixel power string (130) comprises a first zone (130ₚᵣₑ) in which leading pixels are switched on and off in a manner that will result in preheating the build material (500) prior to solidification, and a further zone (130ₘₑₗₜ) in which the remaining pixels are on;
- arranging a light valve assembly (16) to receive the planar beam (12);
- expanding a beam (18) generated by the light valve assembly (16);
- performing distortion correction on the beam (26) from the scanning device (24) to give a work beam (30) in the form of a linear array (32) at the build area (22);
- directing the work beam (30) towards a build area surface (22);
- whereby the light valve assembly (16) and scanning device (24) are operated to sweep the work beam (30) across the build area (22) while applying the sequence of pixel switching strings (130), thereby preheating build material (500) immediately prior to melting and solidification.

12. A method according to claim 11, wherein a step of heating a region of the build area (22) to a temperature below that of solidification of the build material (500) precedes a step of heating that region to a solidification temperature by at most 100 ms, more preferably by at most 10 ms, more preferably by at most 1 ms.

13. A method according to claim 11 or claims 12, wherein the end-to-end width (w₃₀) of the work beam (30) is less than the width of the build area surface (22), and the work beam (30) is applied to the build area surface (22) in passes over the width of the build area (22).

14. A method according to claim 13, wherein the passes are adjacent, and together cover the extent of the build area surface (22) in the build-up of an object layer.

15. A method according to any of claims 11 to 14, wherein the grating light valve (16) and the scanning device (24) are controlled to guide the work beam (30) along a lengthwise strip of the build area (22), wherein the area of the lengthwise strip comprises a fraction of the build area.

## Patentansprüche

1. Additive Herstellungsvorrichtung (1) zur Herstellung eines Objekts (50) unter Verwendung einer energetischen Quelle verfestigender Strahlung, die auf ein Aufbaumaterial (500) in einem Aufbaubereich (22) einwirkt, umfassend:
- ein optisches Element (14) zur Aufweitung eines Strahlenbündels (L) in ein planares Strahlenbündel (12);
- eine Lichtventileinheit (16), die so angeordnet ist, dass sie den planaren Strahl (12) empfängt und ein Ausgangsfeld (18) aus einzeln gesteuerten Lichtpunkten erzeugt;
- einen Strahlaufweiter (20) zur Erweiterung des Ausgangs des Lichtventils (16);
- eine Abtastvorrichtung (24), die so konfiguriert ist, dass sie den aufgeweiteten Strahl (26) vom Strahlaufweiter (20) empfängt und den aufgeweiteten Strahl (26) auf den Aufbaubereich (22) richtet;
- eine Linsenanordnung (28), die so konfiguriert ist, dass sie die Verzerrung des aufgeweiteten Strahls (26) von der Abtastvorrichtung (24) korrigiert, um einen Arbeitsstrahl (30) in Form eines linearen Arrays (32) auf dem Aufbaubereich (22) zu bilden;
- eine Eingabeschnittstelle zum Empfangen einer Sequenz von Pixelleistungsstrings (130) für eine gewünschte Belichtung einer Objektschicht (51) des Objekts (50), wobei jeder Pixelleistungsstring (130) eine führende Zone (130ₚᵣₑ), in der führende Pixel in einer Weise ein- und ausgeschaltet werden, die zu einem Vorheizen des Aufbaumaterials (500) vor der Verfestigung führt, und eine Schmelzzone (130ₘₑₗₜ) umfasst, in der die übrigen Pixel eingeschaltet sind; und
- eine Steuerung (13), die so konfiguriert ist, dass sie zumindest die Lichtventilanordnung (16) und die Abtastvorrichtung (24) so steuert, dass der Arbeitsstrahl (30) über den Aufbaubereich (22) geschwenkt wird, während die Sequenz von Pixelschaltstrings (130) angewendet wird, um die Lichtventilanordnung (16) zu steuern, wodurch Aufbaumaterial (500) unmittelbar vor dem Schmelzen und Verfestigen vorgeheizt wird.

2. Vorrichtung zur additiven Fertigung nach Anspruch 1, wobei ein Pixelleistungsstring (130) für eine gewünschte Belichtung einer Schicht des Objekts (50) einen Schaltzustand für jeden Lichtpunkt des Ausgangsarrays (32) umfasst.

3. Vorrichtung zur additiven Fertigung nach Anspruch 1 oder 2, die eine Einheit (15) zum Zusammenstellen von Pixelleistungsstrings umfasst, die so konfiguriert ist, dass sie einen Pixelleistungsstring (130) für eine Schicht eines Objekts (50) zusammenstellt.

4. Vorrichtung zur additiven Fertigung nach einem der vorhergehenden Ansprüche, wobei ein Pixelleistungsstring (130) ferner eine gesteuerte Kühlzone (130ₚₒₛₜ) umfasst, in der Pixel mit einer Frequenz geschaltet werden, die dazu beiträgt, dass das geschmolzene Baumaterial weniger schnell abkühlt.

5. Vorrichtung zur additiven Fertigung nach einem der vorhergehenden Ansprüche, wobei die Linsenanordnung (28) so konfiguriert ist, dass sie den Strahl (26) von der Abtastvorrichtung (24) zur Verzerrungskorrektur korrigiert, bevor sie den Aufbaubereich (22) belichtet.

6. Additive Fertigungsvorrichtung nach einem der vorhergehenden Ansprüche, wobei die Abtastvorrichtung (24) einen x-y-Scanner umfasst.

7. Additive Fertigungsvorrichtung nach einem der vorhergehenden Ansprüche, wobei die Lichtventileinheit ein Gitterlichtventil (16) umfasst.

8. Vorrichtung zur additiven Fertigung nach Anspruch 7, wobei das Gitterlichtventil (16) so gewählt ist, um einen erweiterten Strahl (26) mit 1088 einzeln steuerbaren Strahlen zu erhalten.

9. Additive Fertigungsvorrichtung nach einem der Ansprüche 1 bis 6, wobei die Lichtventileinheit ein planares Lichtventil umfasst.

10. Vorrichtung zur additiven Fertigung nach einem der vorhergehenden Ansprüche, wobei die Linsenanordnung (28) so konfiguriert ist, dass ein Arbeitsstrahl (30) mit einer durchgehenden Breite (w₃₀) erhalten wird, der kleiner ist als die Breite des Aufbaubereichs (22).

11. Additives Fertigungsverfahren zur Herstellung eines Objekts (50) mit einer additiven Fertigungsvorrichtung (1) nach einem der Ansprüche 1 bis 10, wobei das Verfahren die folgenden Schritte umfasst:
- Bereitstellung eines planaren Strahls (12) verfestigender Strahlung;
- Empfang einer Sequenz von Pixelleistungsstrings (130) für eine gewünschte Belichtung von mindestens einem Teil einer Schicht des Objekts (50), wobei jeder Pixelleistungsstring (130) eine erste Zone (130ₚᵣₑ), in der führende Pixel in einer Weise ein- und ausgeschaltet werden, die zu einer Vorwärmung des Aufbaumaterials (500) vor der Verfestigung führt, und eine weitere Zone (130ₘₑₗₜ), in der die verbleibenden Pixel eingeschaltet sind, umfasst;
- Anordnen einer Lichtventileinheit (16) zum Empfang des planaren Strahls (12);
- Aufweiten eines von der Lichtventileinheit (16) erzeugten Strahls (18);
- Durchführen einer Verzerrungskorrektur des Strahls (26) von der Abtastvorrichtung (24), um einen Arbeitsstrahl (30) in Form eines linearen Arrays (32) auf dem Aufbaubereich (22) zu erzeugen;
- Richten des Arbeitsstrahls (30) auf die Oberfläche des Aufbaubereichs (22);
- wobei die Lichtventileinheit (16) und die Abtastvorrichtung (24) so betrieben werden, dass der Arbeitsstrahl (30) über den Aufbaubereich (22) geschwenkt wird, während die Sequenz von Pixelleistungsstrings (130) angewendet wird, wodurch das Aufbaumaterial (500) unmittelbar vor dem Schmelzen und Verfestigen vorgeheizt wird.

12. Verfahren nach Anspruch 11, bei dem ein Schritt des Erwärmens einer Region des Aufbaubereichs (22) auf eine Temperatur unterhalb der Verfestigungstemperatur des Aufbaumaterials (500) einem Schritt des Erwärmens dieses Bereichs auf eine Verfestigungstemperatur um höchstens 100 ms, bevorzugter um höchstens 10 ms, noch bevorzugter um höchstens 1 ms vorausgeht.

13. Verfahren nach Anspruch 11 oder 12, wobei die durchgehende Breite (w₃₀) des Arbeitsstrahls (30) geringer ist als die Breite der Oberfläche des Aufbaubereichs (22) und der Arbeitsstrahl (30) auf die Oberfläche des Aufbaubereichs (22) in Durchgängen über die Breite des Aufbaubereichs (22) aufgebracht wird.

14. Verfahren nach Anspruch 13, bei dem die Durchgänge nebeneinander liegen und zusammen die gesamte Oberfläche des Aufbaubereichs (22) beim Aufbau einer Objektschicht abdecken.

15. Verfahren nach einem der Ansprüche 11 bis 14, wobei das Gitterlichtventil (16) und die Abtastvorrichtung (24) so gesteuert werden, dass sie den Arbeitsstrahl (30) entlang eines Längsstreifens des Aufbaubereichs (22) führen, wobei der Bereich des Längsstreifens einen Bruchteil des Aufbaubereichs umfasst.

## Revendications

1. Appareil de fabrication additive (1) permettant de fabriquer un objet (50) à l'aide d'une source énergétique de rayonnement de solidification agissant sur un matériau de construction (500) dans une zone de construction (22), comprenant:
- un élément optique (14) réalisé pour étendre un faisceau de rayonnement (L) en un faisceau plan (12);
- un assemblage de vannes d'éclairage (16) conçu pour recevoir le faisceau planaire (12) et pour générer un réseau de sortie (18) de points lumineux contrôlés individuellement;
- un expandeur de faisceau (20) pour étendre la sortie de la valve lumineuse (16);
- un dispositif de balayage (24) configuré pour recevoir le faisceau élargi (26) de l'expandeur de faisceau (20) et pour diriger le faisceau élargi (26) vers la zone de construction (22);
- un dispositif de lentilles (28) configuré pour corriger la distorsion du faisceau élargi (26) provenant du dispositif de balayage (24) afin d'obtenir un faisceau de travail (30) sous la forme d'un réseau linéaire (32) sur la zone de construction (22);
- une interface d'entrée pour recevoir une séquence de chaînes de puissance de pixels (130) pour une exposition souhaitée d'une couche d'objet (51) de l'objet (50), dans laquelle chaque chaîne de puissance de pixels (130) comprend une zone d'attaque (130ₚᵣₑ) dans laquelle les pixels d'attaque sont activés et désactivés de manière à préchauffer le matériau de construction (500) avant la solidification, et une zone de fusion (130ₘₑₗₜ) dans laquelle les pixels restants sont activés; et
- un contrôleur (13) configuré pour commander au moins l'assemblage de vannes d'éclairage (16) et le dispositif de balayage (24) pour balayer le faisceau de travail (30) à travers la zone de construction (22) tout en appliquant la séquence de chaînes de commutation de pixels (130) pour commander l'assemblage de vannes d'éclairage (16), préchauffant ainsi le matériau de construction (500) immédiatement avant la fusion et la solidification.

2. Appareil de fabrication additive selon la revendication 1, dans lequel une chaîne de puissance de pixel (130) pour une exposition souhaitée d'une couche de l'objet (50) comprend un état de commutation pour chaque point lumineux de la matrice de sortie (32).

3. Appareil de fabrication additive selon la revendication 1 ou la revendication 2, comprenant une unité de compilation de chaîne de puissance de pixels (15) configurée pour compiler une chaîne de puissance de pixels (130) pour une couche d'un objet (50).

4. Appareil de fabrication additive selon l'une des revendications précédentes, dans lequel une chaîne de puissance de pixels (130) comprend en outre une zone de refroidissement contrôlé (130ₚₒₛₜ) dans laquelle les pixels sont commutés à une fréquence qui aide le matériau de construction fondu à refroidir moins rapidement.

5. Appareil de fabrication additive selon l'une des revendications précédentes, dans lequel le dispositif de lentilles (28) est configuré pour corriger le faisceau (26) provenant du dispositif de balayage (24) afin de corriger la distorsion avant d'exposer la zone de construction (22).

6. Appareil de fabrication additive selon l'une des revendications précédentes, dans lequel le dispositif de balayage (24) comprend un scanner x-y.

7. Appareil de fabrication additive selon l'une des revendications précédentes, dans lequel l'assemblage de vannes d'éclairage comprend une valve lumineuse à réseau (16).

8. Appareil de fabrication additive selon la revendication 7, dans lequel la valve lumineuse à réseau (16) est choisie pour obtenir un faisceau élargi (26) comprenant 1088 faisceaux contrôlables individuellement.

9. Appareil de fabrication additive selon l'une des revendications 1 à 6, dans lequel l'assemblage de vannes d'éclairage comprend une vannes d'éclairage plane.

10. Appareil de fabrication additive selon l'une quelconque des revendications précédentes, dans lequel l'agencement des lentilles (28) est configuré pour obtenir un faisceau de travail (30) dont la largeur de bout en bout (w₃₀) est inférieure à la largeur de la zone de construction (22).

11. Procédé de fabrication additive d'un objet (50) avec un appareil de fabrication additive (1) selon l'une quelconque des revendications 1 à 10, lequel procédé comprend les étapes suivantes:
- fournir un faisceau plan (12) de rayonnement de solidification;
- recevoir d'une séquence de chaînes de puissance de pixels (130) pour une exposition souhaitée d'au moins une partie d'une couche de l'objet (50), dans laquelle chaque chaîne de puissance de pixels (130) comprend une première zone (130ₚᵣₑ) dans laquelle les pixels principaux sont activés et désactivés de manière à préchauffer le matériau de construction (500) avant la solidification, et une autre zone (130ₘₑₗₜ) dans laquelle les pixels restants sont activés;
- disposer un ensemble de valves lumineuses (16) pour recevoir le faisceau planaire (12);
- étendre d'un faisceau (18) généré par l'assemblage de vannes d'éclairage (16);
- corriger la distorsion du faisceau (26) provenant du dispositif de balayage (24) afin d'obtenir un faisceau de travail (30) sous la forme d'un réseau linéaire (32) sur la zone de construction (22);
- orienter le faisceau de travail (30) vers une surface de construction (22);
- par lequel l'assemblage de vannes d'éclairage (16) et le dispositif de balayage (24) sont actionnés pour balayer le faisceau de travail (30) sur la zone de construction (22) tout en appliquant la séquence de chaînes de commutation de pixels (130), ce qui permet de préchauffer le matériau de construction (500) immédiatement avant la fusion et la solidification.

12. Procédé selon la revendication 11, dans lequel une étape de chauffage d'une région de la zone de construction (22) à une température inférieure à celle de la solidification du matériau de construction (500) précède une étape de chauffage de cette région à une température de solidification d'au plus 100 ms, de préférence d'au plus 10 ms, de préférence d'au plus 1 ms.

13. Procédé selon la revendication 11 ou 12, dans lequel la largeur de bout en bout (w₃₀) du faisceau de travail (30) est inférieure à la largeur de la surface de la zone de construction (22), et le faisceau de travail (30) est appliqué à la surface de la zone de construction (22) par passes sur la largeur de la zone de construction (22).

14. Procédé selon la revendication 13, dans lequel les passes sont adjacentes et couvrent ensemble l'étendue de la surface de la zone de construction (22) dans la construction d'une couche d'objet.

15. Procédé selon l'une des revendications 11 à 14, dans lequel la vannes d'éclairage à réseau (16) et le dispositif de balayage (24) sont commandés pour guider le faisceau de travail (30) le long d'une bande longitudinale de la zone de construction (22), la zone de la bande longitudinale comprenant une fraction de la zone de construction.
